# EUROPEAN PATENT APPLICATION

(11) **EP 4 583 211 A1**
(43) Date of publication of application: **09.07.2025**
(21) Application number: 22956812.6
(22) Date of filing: 30.08.2022
(51) Int. Cl.: H01M 4/78, H01M 50/209, H01M 50/244, H01M 50/249

(54) **CASE, BATTERY, AND ELECTRIC DEVICE**

(71) Applicant: Contemporary Amperex Technology Co., Limited, Ningde, Fujian 352100 (CN)
(72) Inventor: LIN, Xinwei, Ningde, Fujian 352100 (CN); LI, Lingyu, Ningde, Fujian 352100 (CN)
(74) Representative: Ran, Handong
(86) International application number: PCT/CN2022/115918
(87) International publication number: WO 2024/044980

(57) **Abstract**

The present application relates to the technical field of batteries, and provides a case, a battery, and an electric device. The case comprises a frame, a partition beam, and reinforcing parts. The partition beam is provided in the frame, and is configured to divide an accommodating space into a first accommodating space and a second accommodating space, the first accommodating space being used for accommodating battery cells. The reinforcing parts are provided in the second accommodating space. The reinforcing parts are arranged between the partition beam and the frame, and are used for transmitting force between the partition beam and the frame. By arranging the reinforcing parts between the frame and the partition beam, the reinforcing parts can provide a support for the partition beam, so that when the battery cells accommodated in the first accommodating space displace or expand, the force applied to the partition beam by the battery cells can be transmitted to the frame by means of the reinforcing parts, so as to effectively improve the deformation resistance of the partition beam under the pressing of the battery cells, thereby improving the service life and the use safety of the battery.

## Description

### Technical Field

The present disclosure relates to the field of battery technology, in particular to a box, a battery, and an electrical equipment.

### Background Art

In recent years, new energy vehicles have made significant progress. In the field of electric vehicles, power batteries play an irreplaceable and important role as the power source of electric vehicles. With the vigorous promotion of new energy vehicles, the demand for power batteries is also increasing. As a core component of new energy vehicles, batteries have high requirements for cruising ability, such as energy density and weight of the battery. The battery is composed of a box and multiple battery cells stacked inside the box. However, during the recycling process, battery cells may experience volume expansion, which can easily lead to risks such as fire and explosion due to expansion and deformation of the battery cell, resulting in a shorter lifespan of the battery and significant safety hazards.

### Summary

The embodiments of the present disclosure provide a box, a battery, and an electrical equipment, which can effectively improve the service life and the usage safety of the battery.

In the first aspect, the embodiment of the present disclosure provides a box, comprising a frame, a partition beam, and a reinforcer, wherein the frame forms an accommodation space; the partition beam is set inside the frame, and is configured to divide the accommodating space into a first accommodating space and a second accommodating space, wherein the first accommodating space is used to accommodate the battery cell; the reinforcer is set in the second containment space, and the reinforcer is set between the partition beam and the frame; and the reinforcer is used to transfer force between the partition beam and the frame.

In the above technical solution, a partition beam is installed in the accommodating space of the frame, and the partition beam can divide the accommodating space into a first accommodating space for accommodating battery cells and a second accommodating space for accommodating other components of the battery, so that the partition beam can limit the displacement or expansion of the battery cells during use. By setting reinforcer in the second accommodating space and placing reinforcer between the frame and the partition beam, the reinforcer can provide support for the partition beam without occupying the space for placing battery cells. This enables the force of the battery cells acting on the partition beam to be transmitted to the frame through the reinforcer when the battery cells accommodated in the first accommodating space move or expand. This can effectively enhance the deformation resistance of the partition beam under the compression of battery cells. The box of this structure, on one hand, can effectively alleviate the deformation of the partition beam, improve the resistance of the partition beam to the displacement or expansion of battery cells, reduce the risk of fire and explosion caused by displacement collision or expansion deformation of battery cells, and thus improve the service life and usage safety of batteries with this type of box; on the other hand, can reduce the design requirements for the partition beam to resist the displacement or expansion of battery cells, which means that it can reduce the structural strength of the partition beam itself, thereby simplifying the structural design of the partition beam, and reducing its weight and volume, which is conducive to improving the internal space utilization rate of batteries with this type of box and achieving the lightweight battery.

In some embodiments, a cavity is formed inside the reinforcer.

In the above technical solution, by setting a cavity inside the reinforcer, the reinforcer can reduce its own weight while transmitting force to the partition beam, achieving lightweight reinforcer, thereby helping to reduce the overall weight of the box.

In some embodiments, reinforcing ribs are provided inside the cavity, and the reinforcing ribs are connected to the cavity wall surface of the cavity.

In the above technical solution, by setting reinforcing ribs that are connected to the cavity wall surface of the cavity inside the reinforcer, it is beneficial to improve the structural strength of the reinforcer while achieving the lightweight reinforcer, thereby reducing the risk of deformation or damage of the reinforcer during use, and ensuring the support effect of the reinforcer on the partition beam.

In some embodiments, the reinforcer is made using an extrusion molding process.

In the above technical solution, the production and manufacturing of reinforcer through extrusion molding process is convenient for the forming of reinforcer, which is conducive to reducing the manufacturing difficulty of reinforcer and improving the mechanical properties of reinforcer, so as to effectively transmit the force acting on the partition beam by the battery cell.

In some embodiments, the box further comprises a bottom plate, the frame is arranged around the bottom plate, and the reinforcer is fixedly connected to at least one of the frame, partition beam, and bottom plate.

In the above technical solution, the box is also equipped with a bottom plate, and the frame is arranged around the bottom plate, so that the bottom plate can provide good support for the battery cells accommodated in the first accommodating space. In addition, by fixedly connecting the reinforcer to at least one of the frame, partition beam, and bottom plate, it is beneficial to improve the structural stability of the reinforcer, thereby effectively enhancing the transmission effect of the reinforcer on the force acting on the partition beam by the battery cell.

In some embodiments, the two sides of the reinforcer respectively abut against and are fixedly connected to the frame and the partition beam.

In the above technical solution, by fixing the two sides of the reinforcer to the frame and the partition beam respectively, on the one hand, the reliability of the connection, in which the reinforcer is provided between the frame and the partition beam, can be effectively improved, reducing the risk of the reinforcer falling off during later use. On the other hand, the support effect of the reinforcer on the partition beam can be effectively improved. It is beneficial to ensure the transmission effect of the reinforcer on the force acting on the partition beam by the battery cell, thereby further improving the deformation resistance of the partition beam.

In some embodiments, the reinforcer is made of metal material, and the frame has a connecting part, wherein the connecting part is used for welding with the reinforcer, and the connecting part is made of metal material.

In the above technical solution, by welding the connecting part of the frame configured to be connected to the reinforcer and the reinforcer, it is conducive to improving the stability and reliability of the connection between the reinforcer and the frame, and facilitating the transmission of force of the battery cell by the reinforcer.

In some embodiments, the reinforcer is made of metal material, and the partition beam has a connecting wall, wherein the connecting wall is used for welding with the reinforcer, and the connecting wall is made of metal material.

In the above technical solution, by welding the connecting wall of the partition beam configured to be connected to the reinforcer and the reinforcer, it is beneficial to improve the stability and reliability of the connection between the reinforcer and the partition beam, and can effectively improve the support effect of the reinforcer on the partition beam, thereby enhancing the ability of the partition beam to resist the displacement or expansion of battery cells.

In some embodiments, the two sides of the reinforcer are welded to the frame and the partition beam respectively, and the reinforcer, frame, and partition beam are all made of the same metal material.

In the above technical solution, by welding the two sides of the reinforcer with the frame and the partition beam respectively, it is conducive to further improving the connection firmness of the reinforcer connected between the frame and the partition beam. On the one hand, it can further reduce the risk of the reinforcer falling off during use, and on the other hand, it is convenient for the reinforcer to transfer the force of the battery cell acting on the partition beam to the frame.

In some embodiments, the frame comprises a first plate, wherein the first plate is used to connect with the reinforcer, and the first plate is set at an acute angle with the partition beam.

In the above technical solution, the frame has a first plate connected to the reinforcer. By setting the first plate at an acute angle with the partition beam, a necking area of the box is formed at the position of the first plate, and a triangular area is formed between the partition beam and the first plate. This is beneficial for saving the space occupied by the box, and on the other hand, the reinforcer is set between the first plate and the partition beam, that is, the reinforcer is set within the triangular area formed between the first plate and the partition beam, which can improve the structural stability between the first plate, reinforcer, and partition beam, and is conducive to optimizing the size of the reinforcer to reduce the manufacturing cost of the box.

In some embodiments, the reinforcer is in a prismatic structure, and the first plate and the partition beam are connected to different prismatic sides of the reinforcer.

In the above technical solution, by setting the reinforcer as a prismatic structure and connecting the first plate and the partition beam to different prismatic sides of the reinforcer, the box with this structure not only facilitates the reinforcer to transfer the force of the battery cell acting on the partition beam to the first plate set at an acute angle with the partition beam, but also improves the structural strength of the reinforcer, so as to reduce the risk of deformation during the transmission of force of the battery cell by the reinforcer, thereby ensuring the effective transmission of force of the battery cell by the reinforcer.

In some embodiments, the reinforcer is in a straight triangular prism structure, comprising a first prism side, a second prism side, and a third prism side that are sequentially connected end to end, wherein the first prism side is used to connect to the first plate, and the second prism side is used to connect to the partition beam, wherein the surface area of the first prism side and the surface area of the second prism side are both greater than that of the third prism side.

In the above technical solution, by setting the reinforcer as a straight triangular prism structure and connecting the first and second prism sides with larger areas in the prism sides of the reinforcer to the first plate and partition beam respectively, it is beneficial to increase the contact area between the reinforcer and the first plate and partition beam, thereby improving the structural stability between the first plate, reinforcer and partition beam. Furthermore, it facilitates the partition beam to transfer the force generated by the battery cells to the first plate of the frame through reinforcer, which is beneficial for improving the resistance effect of the partition beam to the displacement or expansion of the battery cells.

In some embodiments, the reinforcer is configured to be welded to the first plate and the partition beam respectively, and form a first weld joint and a second weld joint, wherein the first weld joint extends along at least a portion of the outer edge of the first prism side, and the second weld joint extends along at least a portion of the outer edge of the second prism side.

In the above technical solution, by welding the reinforcer with the first plate and forming a first weld joint, and making the first weld joint extend along at least part of the outer edge of the first prism side of the reinforcer, at least part of the outer edge of the first prism side of the reinforcer is welded with the first plate to form a first weld joint. This welding structure is conducive to reducing the welding difficulty between the reinforcer and the first plate, and can ensure the welding strength between the first plate and the reinforcer. Similarly, by welding the reinforcer and the partition beam together to form a second weld joint, and making the second weld joint extend along at least a portion of the outer edge of the second prism side of the reinforcer, at least a portion of the outer edge of the second prism side of the reinforcer is welded with the partition beam to form a second weld joint. This welding structure is conducive to reducing the difficulty of welding between the reinforcer and the partition beam, and can ensure the welding strength between the partition beam and the reinforcer.

In some embodiments, a cavity is formed inside the reinforcer that runs through both ends of the reinforcer in the first direction, and the first direction is parallel to the side edges of the reinforcer.

In the above technical solution, by setting a cavity extending in the first direction inside the reinforcer, that is, the cavity penetrating the two ends of the reinforcer along the extension direction of the side edge of the reinforcer, the surface through which the reinforcer is penetrated by the cavity is different from the surfaces on which the reinforcer is used to connect with the first plate and the partition beam respectively, thereby reducing the weight of the reinforcer while ensuring the contact area between the reinforcer and the first plate and the partition beam, so as to reduce the overall weight of the box.

In some embodiments, the extension direction of the reinforcer is parallel to the thickness direction of the partition beam, and the two ends of the reinforcer are respectively connected to the first plate and the partition beam.

In the above technical solution, by setting the extension direction of the reinforcer to be parallel to the thickness direction of the partition beam, the reinforcer is a structure perpendicular to the partition beam. The box of this structure can improve the support effect of the reinforcer on the partition beam, so that the reinforcer can transfer the force of the battery cell acting on the partition beam to the first plate, thereby improving the deformation resistance of the partition beam.

In some embodiments, a cavity is formed inside the reinforcer that runs through both ends of the reinforcer along the thickness direction of the partition beam.

In the above technical solution, by setting cavity extending along the thickness direction of the partition beam inside the reinforcer, wherein the cavity extends through both ends of the reinforcer, the extension direction of the cavity is consistent with the extension direction of the reinforcer, so that the cross-section of the cavity of the reinforcer is connected to the partition beam. Adopting this structure of the reinforcer can reduce the weight of the reinforcer on one hand, and achieve the lightweight box. On the other hand, it is beneficial for the reinforcer to transfer the force of the battery cells on the partition beam to the first plate, and can effectively reduce the phenomenon of deformation of the reinforcer.

In some embodiments, the length of the frame along the thickness direction of the partition beam is L₁, which satisfies: 900mm ≤ L₁ ≤ 2800mm.

In some embodiments, the length of the partition beam is L₂, which satisfies: 500mm ≤ L₂ ≤ 1700mm.

In the second aspect, the embodiment of the present disclosure also provides a battery, comprising a battery cell and the above-mentioned box, wherein the battery cell is accommodated in the first accommodating space.

In some embodiments, the projection of the reinforcer along the thickness direction of the partition beam coincides at least partially with the projection of the battery cell.

In the above technical solution, by setting the projection of the reinforcer in the thickness direction of the partition beam to coincide with at least a part of the projection of the battery cell, the reinforcer is correspondingly set with at least a part of the battery cell in the thickness direction of the partition beam, so that the reinforcer can support and strengthen the area where the partition beam supports the displacement or expansion of the battery cell. This is conducive to further improving the effectiveness of the partition beam in resisting the displacement or expansion of battery cells, and facilitates the reinforcer to transfer the force exerted by battery cells on the partition beam to the frame, thereby alleviating the deformation phenomenon of the partition beam.

In some embodiments, the battery cell is in a cuboid structure, and the battery cell has a first surface, wherein the first surface is the surface with the largest area among the outer surfaces of the battery cell, and the first surface is set facing the partition beam.

In the above technical solution, the first surface with the largest area in the outer surfaces of the battery cell is set facing the partition beam, that is, the surface with the largest expansion size of the battery cell is set facing the partition beam during use. Therefore, the partition beam can effectively constrain the expansion of the battery cell, reducing the risk of fire and explosion caused by excessive expansion and deformation of the battery cell during use.

In some embodiments, the battery cell comprises an electrode assembly in a wound structure, wherein the winding axis of the electrode assembly is perpendicular to the thickness direction of the partition beam, and the size of the electrode assembly in the thickness direction of the partition beam is smaller than the size of the electrode assembly in other directions perpendicular to the winding axis of the electrode assembly.

In the above technical solution, by setting the winding axis of the electrode assembly inside the battery cell perpendicular to the thickness direction of the partition beam, and making the electrode assembly have the smallest size in the thickness direction of the partition beam, the electrode assembly of the wound structure is flat, and the thickness direction of the flat area of the electrode assembly is consistent with the thickness direction of the partition beam. The battery with this structure can effectively constrain in the direction of maximum expansion size of the battery cell through the partition beam, in order to reduce the phenomenon of expansion and deformation of the battery cell with electrode assembly in a wound structure.

In some embodiments, the battery cell comprises an electrode assembly in a stacked structure, and the stacking direction of the electrode assembly is parallel to the thickness direction of the partition beam.

In the above technical solution, by setting the stacking method of the electrode assembly inside the battery cell to be consistent with the thickness direction of the partition beam, the battery with this structure can effectively constrain in the direction of the maximum expansion size of the battery cell through the partition beam, in order to alleviate the phenomenon of expansion and deformation of the battery cell with stacked electrode assembly.

In some embodiments, the thickness of the battery cell along the thickness direction of the partition beam is L₃, which satisfies: 5mm≤L₃≤40mm.

In some embodiments, the length of the battery cell along the extension direction of the partition beam is L₄, which satisfies: 400mm ≤ L₄ ≤ 2500mm.

In some embodiments, the battery cell is in a cylindrical structure, and the axis direction of the battery cell is perpendicular to the thickness direction of the partition beam.

In the above technical solution, the battery cells placed inside the battery box are in a cylindrical structure. By setting the axis direction of the battery cells to be consistent with the thickness direction of the partition beam, the outer peripheral surface of the battery cells is facing the partition beam. This structure of the battery can effectively constrain in the direction of the maximum expansion size of the battery cells through the partition beam.

In some embodiments, there are multiple battery cells arranged in a stacked manner along the thickness direction of the partition beam.

In the above technical solution, multiple battery cells arranged in the box are stacked along the thickness direction of the partition beam, so that the partition beam can limit at the direction of maximum expansion size of multiple battery cells, and can simultaneously limit the expansion of multiple battery cells, thereby alleviating the risk of expansion and deformation of multiple battery cells of the battery, which is beneficial for improving the service life and usage safety of batteries.

In the third aspect, the embodiment of the present disclosure also provides an electrical equipment, comprising the above battery for providing electrical energy.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is a structural explosion view of the battery provided in some embodiments of the present disclosure;
FIG. 3 is a structural schematic view of the box provided in some embodiments of the present disclosure;
FIG. 4 is a partial enlarged view of the A position of the box shown in FIG. 3;
FIG. 5 is a structural schematic view of the reinforcer of the box provided in some embodiments of the present disclosure;
FIG. 6 is a structural schematic view of the reinforcer of the box provided in some other embodiments of the present disclosure;
FIG. 7 is a locally sectional view of the box provided in some embodiments of the present disclosure;
FIG. 8 is a partially structural schematic view of the box provided in some other embodiments of the present disclosure;
FIG. 9 is a structural schematic view of the reinforcer of the box provided in some other embodiments of the present disclosure; and
FIG. 10 is a locally sectional view of the box provided in some other embodiments of the present disclosure.

Reference signs: 1000-vehicle; 100-battery; 10-box; 11-frame; 111-first plate; 112-second plate; 113-third plate; 114-fourth plate; 115-fifth plate; 12-partition beam; 13-reinforcer; 131-cavity; 132-reinforcing rib; 133-first prism side; 134-second prism side; 135-third prism side; 136-first end surface; 137-second end surface; 14-first accommodating space; 15-second accommodating space; 16-bottom plate; 20-battery cell; 21-first surface; 30-box cover; 200-controller; 300-motor; X-first direction; Y-thickness direction of partition beam; Z-second direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. Batteries generally include boxes used to encapsulate one or more battery cells or multiple battery modules. The box can prevent liquids or other foreign objects from affecting the charging or discharging of battery cells.

The battery cell includes a shell, electrode assemblies, and electrolyte, and the shell accommodates the electrode assemblies and electrolyte. The electrode assembly can be in a wound structure formed by winding the positive electrode plate, negative electrode plate, and separator, or a stacked structure formed by stacking the positive electrode plate, negative electrode plate, and separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector. The part of the positive electrode current collector without the positive electrode active substance layer is used as the positive electrode tab, so as to input or output electrical energy from the positive electrode plate through the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector. The part of the negative electrode current collector without the negative electrode active substance layer is used as the negative electrode tab, so as to input or output electrical energy from the negative electrode plate through the negative electrode tab. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together.

The material of the separator can be PP (polypropylene) or PE (polyethylene), etc. In addition, the electrode assembly can be of a wound structure or a laminated structure (stacked structure), which is not limited by the embodiments of the present disclosure.

Batteries have outstanding advantages such as high energy density, low environmental pollution, high power density, long service life, wide adaptability, and low self discharge coefficient, which are an important component of the development of new energy now. A battery is usually composed of a box and multiple battery cells stacked inside the box. However, with the continuous development of battery technology, higher requirements have been put forward for the battery cruising ability, especially in terms of energy density and weight of the battery.

The inventor found that for ordinary batteries, multiple battery cells stacked inside the battery box will experience expansion in the stacking direction during cyclic use, which can easily lead to risks such as fire and explosion due to expansion and deformation of battery cells, which is not conducive to the use safety and service life of the battery. In order to solve the problem of deformation of battery cells after expansion during cyclic use, in existing technology, crossbeams are usually set on one side of multiple battery cells in their stacking direction, so that multiple battery cells and crossbeams can abut against each other, thereby limiting the expansion of battery cells through the crossbeams. At the same time, the structural strength of the crossbeams is improved by increasing the thickness of the crossbeams or setting reinforcing ribs inside the crossbeams to reduce the risk of deformation of the crossbeams, effectively improving the ability of the crossbeams to resist the expansion of battery cells and reducing the risk of deformation of battery cells due to expansion during use. However, in this structure of battery, there is a risk of deformation of the crossbeam, which makes the crossbeam less effective in resisting the expansion of the battery cell, resulting in significant safety hazards during use of the battery. Increasing the thickness of the crossbeam or setting reinforcing ribs inside the crossbeam will occupy the internal space of the battery, further increasing the weight of the battery, which is not conducive to improving the energy density of the battery and achieving lightweight battery.

Based on the above considerations, in order to solve the problems of use safety and low utilization of internal space of batteries, the inventor has conducted in-depth research and designed a box, which includes a frame, partition beam, and reinforcer. The frame forms an accommodation space; the partition beam is set inside the frame, and is configured to divide the accommodating space into a first accommodating space and a second accommodating space, wherein the first accommodating space is used to accommodate the battery cell. The reinforcer is located in the second accommodating space, is arranged between the partition beam and the frame, and is used to transfer force between the partition beam and the frame.

In the box of this structure, a partition beam is installed in the accommodating space of the frame, and the partition beam can divide the accommodating space into a first accommodating space for accommodating battery cells and a second accommodating space for accommodating other components of the battery, so that the partition beam can limit the displacement or expansion of the battery cells during use. By setting reinforcer in the second accommodating space and placing reinforcer between the frame and the partition beam, the reinforcer can provide support for the partition beam without occupying the space for placing battery cells. This enables the force of the battery cells acting on the partition beam to be transmitted to the frame through the reinforcer when the battery cells accommodated in the first accommodating space move or expand. This can effectively enhance the deformation resistance of the partition beam under the compression of battery cells. The box of this structure, on one hand, can effectively alleviate the deformation of the partition beam, improve the resistance of the partition beam to the displacement or expansion of battery cells, reduce the risk of fire and explosion caused by displacement collision or expansion deformation of battery cells, and thus improve the service life and usage safety of batteries with this type of box; on the other hand, can reduce the design requirements for the partition beam to resist the displacement or expansion of battery cells, which means that it can reduce the structural strength of the partition beam itself, thereby simplifying the structural design of the partition beam, and reducing its weight and volume, which is conducive to improving the internal space utilization rate of batteries with this type of box and achieving the lightweight battery.

The box disclosed in the embodiments of the present disclosure can be used in, but is not limited to, electrical equipment such as vehicles, ships, or aircraft. The box, battery, etc. disclosed in the present disclosure can be used to form the power supply system of the electrical equipment. In this way, it is beneficial to improve the internal space utilization rate of the battery and achieve lightweight battery, thereby effectively enhancing the battery cruising ability.

The embodiment of the present disclosure provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical device in one embodiment of the present application being the vehicle 1000 as an example to explain.

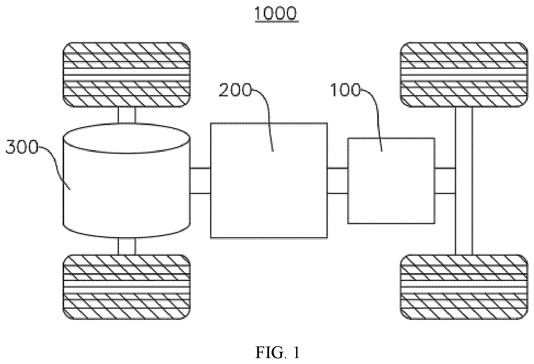

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

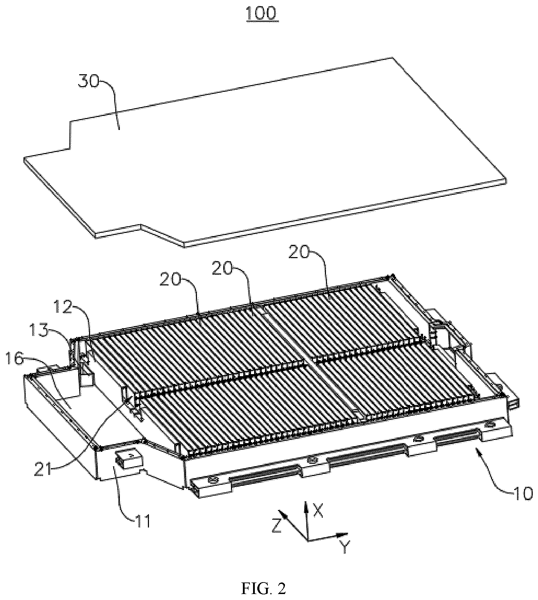

Referring to FIG. 2, FIG. 2 is a structural explosion view of the battery 100 provided in some embodiments of the present application. The battery 100 includes a box 10, a battery cell 20 and a box cover 30, wherein the battery cell 20 is accommodated within the box 10, and the box cover 30 covers the box 10.

In the above, the box 10 is used to provide assembly space for the battery cell 20, and the battery 100 can be of various structures. As shown in FIG. 2, along the first direction X, the box 10 is in a hollow structure with one side opened, and the box cover 30 is in a platelike structure. The box cover 30 covers the opened side of the box 10 to make the box 10 and the box cover 30 jointly define a closed space for accommodating the battery cell 20. In some embodiments, the battery 100 may also have other structures. For example, the battery 100 includes two box covers 30, and the box 10 is in a hollow structures with both sides opened along the first direction X. The two box covers 30 are respectively covered on both sides of the box 10 in the first direction X. Of course, both the box 10 and box cover 30 of the battery 100 can also be in hollow structure with one side opened, and the opened side of the box cover 30 is covered on the opened side of the box 10 to make the box 10 and the box cover 30 jointly define a closed space for accommodating the battery cell 20. Of course, the battery 100 formed by the assembly of box 10 and box cover 30 can be of various shapes, such as cylindrical, rectangular, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for achieving electrical connection between multiple battery cells 20.

As an example, in FIG. 2, the multiple battery cells 20 are stacked in box 10.

In the above, each battery cell 20 can be a secondary battery or a primary battery; and can also be a lithium sulfur battery, sodium ion battery, or magnesium ion battery, but is not limited thereto. The battery cell 20 can be cylindrical, flat, or rectangular, or be of other shapes. As an example, in FIG. 2, the battery cell 20 is in a cuboid structure.

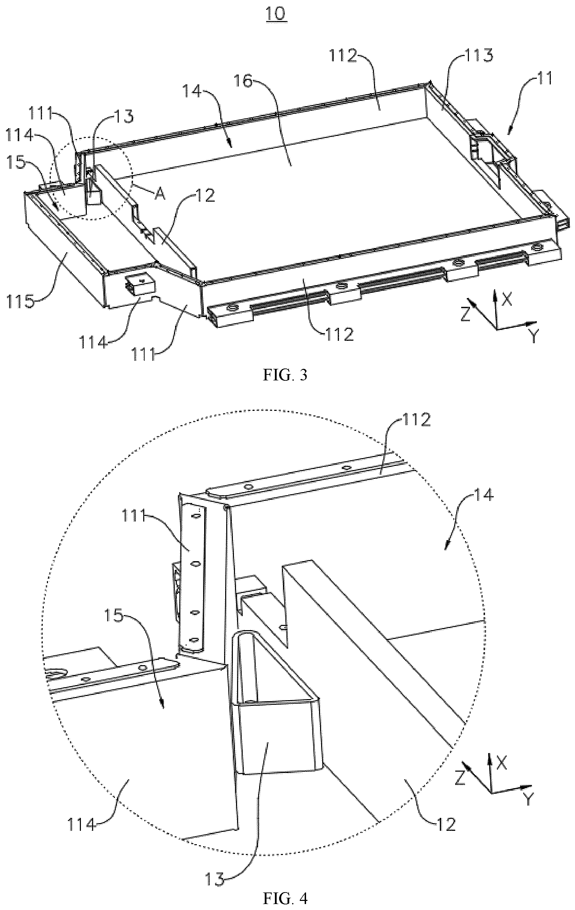

According to some embodiments of the present disclosure, referring to FIG. 2 and further referring to FIGS. 3 and 4, FIG. 3 is a structural schematic view of the box 10 provided in some embodiments of the present disclosure; and FIG. 4 is a partial enlarged view of the A position of the box 10 shown in FIG. 3. The present disclosure provides a box 10, which includes a frame 11, a partition beam 12, and a reinforcer 13. The frame 11 forms an accommodation space; the partition beam 12 is set inside the frame 11, and is configured to divide the accommodating space into a first accommodating space 14 and a second accommodating space 15, wherein the first accommodating space 14 is used to accommodate the battery cell 20. The reinforcer 13 is located in the second accommodating space 15, is arranged between the partition beam 12 and the frame 11, and is used to transfer force between the partition beam 12 and the frame 11.

The reinforcer 13 is used to transfer force between the partition beam 12 and the frame 11, that is, reinforcer 13 is used to transfer the extrusion force acting on the partition beam 12 when the battery cell 20 moves or expands along the thickness direction Y of the partition beam to the frame 11, in order to achieve support for the partition beam 12.

The box 10 can also include a bottom plate 16, with the frame 11 arranged around the bottom plate 16, and forming an accommodating space, and the bottom plate 16 is used to support and place the battery cell 20. In the first direction X, one end of the frame 11 is connected to the bottom plate 16, and the other end forms an opening for being closed by the box cover 30.

In FIG. 3, the partition beam 12 extends along the second direction Z, and is set within the accommodating space, so that the partition beam 12 divides the accommodating space of the frame 11 into the first accommodating space 14 and the second accommodating space 15 arranged along the thickness direction Y of the partition beam. The second accommodating space 15 is used to accommodate other electronic components such as the battery management system of the battery 100. The first direction X, the thickness direction Y of the partition beam, and the second direction Z are perpendicular to each other.

Optionally, there can be multiple connection methods for the partition beam 12, which can be a structure where both ends of the partition beam 12 in the second direction Z are connected to the frame 11, or a structure where the partition beam 12 is connected to the bottom plate 16 at one side in the first direction X.

The reinforcer 13 is located between the partition beam 12 and the frame 11. The reinforcer 13 is configured to transfer the expansion force of the battery cell 20 acting on the partition beam 12 to the frame 11. That is to say, the reinforcer 13 plays a role in supporting the partition beam 12, so that the reinforcer 13 can transfer the expansion force of the battery cell 20 acting on the partition beam 12 due to expansion during use to the frame 11.

The connection structures between the reinforcer 13 and the partition beam 12 can be various. For example, in FIG. 3, the reinforcer 13 and the partition beam 12 abut against each other, so that the reinforcer 13 can directly support the partition beam 12, thereby transmitting the expansion force of the battery cell 20 acting on the partition beam 12 to the frame 11. Of course, in some embodiments, a gap can also be set between the reinforcer 13 and the partition beam 12 in the thickness direction Y of the partition beam, that is, the reinforcer 13 is not in contact with the partition beam 12, so that the partition beam 12 can abut against the reinforcer 13 after deformation under the expansion force of the battery cell 20. Therefore, the reinforcer 13 can provide support for the partition beam 12.

It should be noted that the structure formed by frame 11 can be various, such as triangular structure, rectangular structure, polygonal structure, or irregular structure. As an example, in FIG. 3, the frame 11 is in an irregular structure formed by multiple plates sequentially connected end to end.

The partition beam 12 is installed in the accommodating space of the frame 11, and the partition beam 12 can divide the accommodating space into a first accommodating space 14 for accommodating battery cells 20 and a second accommodating space 15 for accommodating other components of the battery 100, so that the partition beam 12 can limit the displacement or expansion of the battery cells 20 during use. By setting reinforcer 13 in the second accommodating space 15 and placing reinforcer 13 between the frame 11 and the partition beam 12, the reinforcer 13 can provide support for the partition beam 12 without occupying the space for placing battery cells 20. This enables the force of the battery cells 20 acting on the partition beam 12 to be transmitted to the frame 11 through the reinforcer 13 when the battery cells 20 accommodated in the first accommodating space 14 move or expand. This can effectively enhance the deformation resistance of the partition beam 12 under the compression of battery cells 20. The box 10 of this structure, on one hand, can effectively alleviate the deformation of the partition beam 12, improve the resistance of the partition beam 12 to the displacement or expansion of battery cells 20, reduce the risk of fire and explosion caused by displacement collision or expansion deformation of battery cells 20, and thus improve the service life and usage safety of batteries 100 with this type of box 10; on the other hand, can reduce the design requirements for the partition beam 12 to resist the displacement or expansion of battery cells 20, which means that it can reduce the structural strength of the partition beam 12 itself, thereby simplifying the structural design of the partition beam 12, and reducing its weight and volume, which is conducive to improving the internal space utilization rate of batteries 100 with this type of box 10 and achieving the lightweight battery 100.

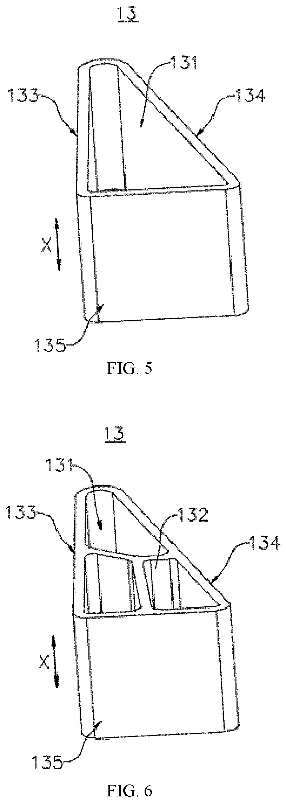

In some embodiments, referring to FIG. 4 and further referring to FIG. 5, FIG. 5 is a structural schematic view of the reinforcer 13 of the box 10 provided in some embodiments of the present disclosure. A cavity 131 is formed inside the reinforcer 13.

As an example, cavity 131 penetrates both ends of reinforcer 13 along the first direction X. Of course, in other embodiments, the cavity 131 can also be formed inside the reinforcer 13, that is, the cavity 131 does not penetrate the reinforcer 13. Similarly, the cavity 131 can also penetrate both ends of the reinforcer 13 along the thickness direction of the partition.

By setting a cavity 131 inside the reinforcer 13, the reinforcer 13 can reduce its own weight while transmitting force to the partition beam 12, achieving lightweight reinforcer 13, thereby helping to reduce the overall weight of the box 10.

In some embodiments, referring to FIG. 6, FIG. 6 is a structural schematic view of the reinforcer 13 of the box 10 provided in some other embodiments of the present disclosure. The reinforcing ribs 132 are provided inside the cavity 131, and the reinforcing ribs 132 are connected to the cavity wall surface of the cavity 131.

One or multiple reinforcing ribs 132 can be set inside the cavity 131. As an example, in FIG. 6, there are three reinforcing ribs 132 arranged inside the cavity 131, and one ends of the three reinforcing ribs 132 are connected to each other, and the other ends are all connected to the cavity wall surface of the cavity 131. Of course, in other embodiments, the reinforcing ribs 132 set inside the cavity 131 can also be provided in the number of one, two, four, or five, etc.

By setting reinforcing ribs 132 that are connected to the cavity wall surface of the cavity 131 inside the reinforcer 13, it is beneficial to improve the structural strength of the reinforcer 13 while achieving the lightweight reinforcer 13, thereby reducing the risk of deformation or damage of the reinforcer 13 during use, and ensuring the support effect of the reinforcer 13 on the partition beam 12.

According to some embodiments of the present disclosure, the reinforcer 13 is made using an extrusion molding process. The manufacturing methods of extrusion molding technology can be found in relevant technologies, and will not be elaborated here.

It should be noted that in other embodiments, the reinforcer 13 can also be made using processes such as stamping or casting.

The production and manufacturing of reinforcer 13 through extrusion molding process is convenient for the forming of reinforcer 13, which is conducive to reducing the manufacturing difficulty of reinforcer 13 and improving the mechanical properties of reinforcer 13, so as to effectively transmit the force acting on the partition beam 12 by the battery cell 20.

According to some embodiments of the present disclosure, referring to FIGS. 3 and 4, the box 10 further comprises a bottom plate 16, the frame 11 is arranged around the bottom plate 16, and the reinforcer 13 is fixedly connected to at least one of the frame 11, partition beam 12, and bottom plate 16.

The reinforcer 13 is fixedly connected to at least one of frame 11, partition beam 12, and bottom plate 16, that is, reinforcer 13 can be connected to one of frame 11, partition beam 12, and bottom plate 16, or to two of frame 11, partition beam 12, and bottom plate 16, or to all of frame 11, partition beam 12, and bottom plate 16.

The box 10 is also equipped with a bottom plate 16, and the frame 11 is arranged around the bottom plate 16, so that the bottom plate 16 can provide good support for the battery cells 20 accommodated in the first accommodating space 14. In addition, by fixedly connecting the reinforcer 13 to at least one of the frame 11, partition beam 12, and bottom plate 16, it is beneficial to improve the structural stability of the reinforcer 13, thereby effectively enhancing the transmission effect of the reinforcer 13 on the force acting on the partition beam 12 by the battery cell 20.

According to some embodiments of the present disclosure, referring to FIG. 4, the two sides of the reinforcer 13 respectively abut against and are fixedly connected to the frame 11 and the partition beam 12.

Optionally, there can be various ways in which the reinforcer 13 is fixedly connected to the frame 11 and the partition beam 12. For example, it is welding, bonding, or bolt connection. As an example, in the embodiment of the present disclosure, the two sides of the reinforcer 13 respectively are welded to the frame 11 and the partition beam 12.

By fixing the two sides of the reinforcer 13 to the frame 11 and the partition beam 12 respectively, on the one hand, the reliability of the connection, in which the reinforcer 13 is provided between the frame 11 and the partition beam 12, can be effectively improved, reducing the risk of the reinforcer 13 falling off during later use. On the other hand, the support effect of the reinforcer 13 on the partition beam 12 can be effectively improved. It is beneficial to ensure the transmission effect of the reinforcer 13 on the force acting on the partition beam 12 by the battery cell 20, thereby further improving the deformation resistance of the partition beam 12.

In some embodiments, the reinforcer 13 is made of metal material, and the frame 11 has a connecting part, wherein the connecting part is used for welding with the reinforcer 13, and the connecting part is made of metal material.

The frame 11 has a connecting part, that is, the area where the frame 11 is used to weld with the reinforcer 13 is the connecting part.

For example, the material of the reinforcer 13 and the connecting part can be steel, iron, aluminum, or copper, etc.

By welding the connecting part of the frame 11 configured to be connected to the reinforcer 13 and the reinforcer 13, it is conducive to improving the stability and reliability of the connection between the reinforcer 13 and the frame 11, and facilitating the transmission of force of the battery cell 20 by the reinforcer 13.

In some embodiments, the reinforcer 13 is made of metal material, and the partition beam 12 has a connecting wall, wherein the connecting wall is used for welding with the reinforcer 13, and the connecting wall is made of metal material.

The partition beam 12 has a connecting wall, that is, the wall surface used by the partition beam 12 to weld with the reinforcer 13 is the connecting wall.

For example, the material of the reinforcer 13 and the connecting wall can be steel, iron, aluminum, or copper, etc.

By welding the connecting wall of the partition beam 12 configured to be connected to the reinforcer 13 and the reinforcer 13, it is beneficial to improve the stability and reliability of the connection between the reinforcer 13 and the partition beam 12, and can effectively improve the support effect of the reinforcer 13 on the partition beam 12, thereby enhancing the ability of the partition beam 12 to resist the displacement or expansion of battery cells 20.

According to some embodiments of the present disclosure, referring to FIG. 4, the two sides of the reinforcer 13 are welded to the frame 11 and the partition beam 12 respectively, and the reinforcer 13, frame 11, and partition beam 12 are all made of the same metal material.

For example, the materials of reinforcer 13, frame 11, and partition beam 12 can all be steel, iron, aluminum, or copper.

By welding the two sides of the reinforcer 13 with the frame 11 and the partition beam 12 respectively, it is conducive to further improving the connection firmness of the reinforcer 13 connected between the frame 11 and the partition beam 12. On the one hand, it can further reduce the risk of the reinforcer 13 falling off during use, and on the other hand, it is convenient for the reinforcer 13 to transfer the force of the battery cell 20 acting on the partition beam 12 to the frame 11.

According to some embodiments of the present disclosure, referring to FIGS. 3 and 4, the frame 11 comprises a first plate 111, wherein the first plate 111 is used to connect with the reinforcer 13, and the first plate 111 is set at an acute angle with the partition beam 12.

The frame 11 is a structure formed by multiple plates sequentially connected and enclosed end to end, and the first plate 111 is the plate used by the frame 11 to connect with the reinforcer 13.

For example, in FIG. 3, the frame 11 may include two first plates 111, which are arranged relative to each other in the second direction Z, and both first plates 111 are arranged at an acute angle with the partition beam 12. In the thickness direction Y of the partition beam, one reinforcer 13 is arranged between each first plate 111 and the partition beam 12, which is conducive to further improving the ability of the partition beam 12 to resist the expansion of the battery cell 20.

In some embodiments, as shown in FIG. 3, the frame 11 may further include two second plates 112, a third plate 113, two fourth plates 114, and a fifth plate 115. Two second plates 112 are set relative to each other along the second direction Z, two fourth plates 114 are set relative to each other along the second direction Z, and the third plate 113 and fifth plate 115 are set relative to each other along the thickness direction Y of the partition beam. One first plate 111, one second plate 112, the third plate 113, another second plate 112, another first plate 111, one fourth plate 114, the fifth plate 115, and another fourth plate 114 are sequentially connected and enclosed end to end to form a frame 11. The two ends of the partition beam 12 in the second direction Z are respectively connected to two second plates 112. The length of the third plate 113 in the second direction Z is greater than the length of the fifth plate 115 in the second direction Z, so that the frame 11 forms a necking area at the position of the first plate 111.

Of course, in other embodiments, the structure of the frame 11 can also be various. For example, the frame 11 may also not include two fourth plates 114, and the two first plates 111 are respectively connected to the two ends of the fifth plate 115 in the second direction Z, so that the partition beam 12, the fifth plate 115, and the two first plates 111 enclose to form a trapezoidal structure of the second accommodating space 15. Similarly, the frame 11 may also not include the fifth plate 115 and two fourth plates 114. One ends of the two first plates 111 are connected to each other, and the other ends are connected to the two second plates 112 respectively, so that the partition beam 12 and the two first plates 111 enclose to form a triangular second accommodating space 15.

The frame 11 has a first plate 111 connected to the reinforcer 13. By setting the first plate 111 at an acute angle with the partition beam 12, a necking area of the box 10 is formed at the position of the first plate 111, and a triangular area is formed between the partition beam 12 and the first plate 111. This is beneficial for saving the space occupied by the box 10, and on the other hand, the reinforcer 13 is set between the first plate 111 and the partition beam 12, that is, the reinforcer 13 is set within the triangular area formed between the first plate 111 and the partition beam 12, which can improve the structural stability between the first plate 111, reinforcer 13, and partition beam 12, and is conducive to optimizing the size of the reinforcer 13 to reduce the manufacturing cost of the box 10.

According to some embodiments of the present disclosure, as shown in FIG. 4, the reinforcer 13 is in a prismatic structure, and the first plate 111 and the partition beam 12 are connected to different prismatic sides of the reinforcer 13.

The prism side is the surface formed between two adjacent edges in the circumferential direction of the reinforcer 13.

Optionally, the reinforcer 13 can be of a straight prism structure or a oblique prism structure. Of course, the side edges of reinforcer 13 can also be three, four, five, or six, etc. As an example, in FIG. 4, reinforcer 13 is in a straight triangular prism structure.

By setting the reinforcer 13 as a prismatic structure and connecting the first plate 111 and the partition beam 12 to different prismatic sides of the reinforcer 13, the box 10 with this structure not only facilitates the reinforcer 13 to transfer the force of the battery cell 20 acting on the partition beam 12 to the first plate 111 set at an acute angle with the partition beam 12, but also improves the structural strength of the reinforcer 13, so as to reduce the risk of deformation during the transmission of force of the battery cell 20 by the reinforcer 13, thereby ensuring the effective transmission of force of the battery cell 20 by the reinforcer 13.

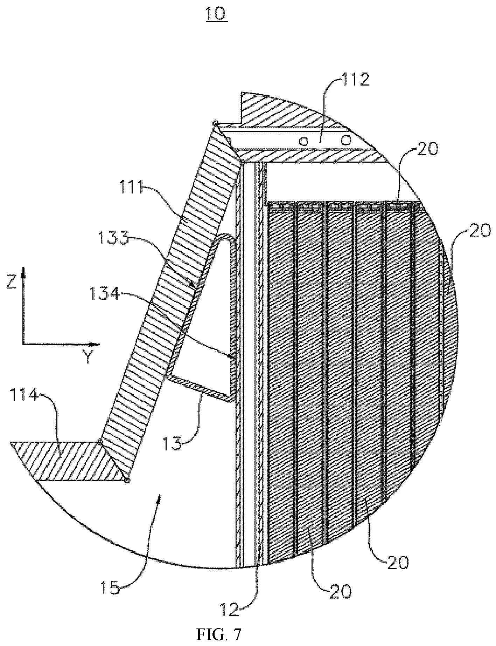

In some embodiments, referring to FIGS. 4 and 5 and further referring to FIG. 7, FIG. 7 is a locally sectional view of the box 10 provided in some embodiments of the present disclosure. The reinforcer 13 is in a straight triangular prism structure, comprising a first prism side 133, a second prism side 134, and a third prism side 135 that are sequentially connected end to end, wherein the first prism side 133 is used to connect to the first plate 111, and the second prism side 134 is used to connect to the partition beam 12. The surface area of the first prism side 133 and the surface area of the second prism side 134 are both greater than that of the third prism side 135.

The reinforcer 13 includes a first prism side 133, a second prism side 134, and a third prism side 135 that are sequentially connected end to end, that is, the first prism side 133, the second prism side 134, and the third prism side 135 are enclosed to form the outer peripheral surface of the reinforcer 13. The first prism side 133 is connected to the surface of the first plate 111 facing the second accommodating space 15, and the second prism side 134 is connected to the surface of the partition beam 12 facing the second accommodating space 15.

As an example, in FIG. 7, the first prism side 133 is attached to the surface of the first plate 111 facing the second accommodating space 15, and the second prism side 134 is attached to the surface of the partition beam 12 facing the second accommodating space 15.

By setting the reinforcer 13 as a straight triangular prism structure and connecting the first prism side 133 and second prism side 134 with larger areas in the prism sides of the reinforcer 13 to the first plate 111 and partition beam 12 respectively, it is beneficial to increase the contact area between the reinforcer 13 and the first plate 111 and partition beam 12, thereby improving the structural stability between the first plate 111, reinforcer 13 and partition beam 12. Furthermore, it facilitates the partition beam 12 to transfer the force generated by the battery cells 20 to the first plate 111 of the frame 11 through reinforcer 13, which is beneficial for improving the resistance effect of the partition beam 12 to the displacement or expansion of the battery cells 20.

According to some embodiments of the present disclosure, the reinforcer 13 is configured to be welded to the first plate 111 and the partition beam 12 respectively, and form a first weld joint and a second weld joint, wherein the first weld joint extends along at least a portion of the outer edge of the first prism side 133, and the second weld joint extends along at least a portion of the outer edge of the second prism side 134.

The first weld joint extends along at least a portion of the outer edge of the first prism side 133, that is, at least a portion of the outer edge of the first prism side 133 of the reinforcer 13 is welded with the first plate 111 to form the first weld joint.

The second weld joint extends along at least a portion of the outer edge of the second prism side 134, that is, at least a portion of the outer edge of the second prism side 134 of the reinforcer 13 is welded with the partition beam 12 to form the second weld joint.

It should be noted that in other embodiments, the first plate 111 can also be connected to the first prism side 133 of the reinforcer 13 by bonding, and the partition beam 12 can also be connected to the second prism side 134 of the reinforcer 13 by bonding.

By welding the reinforcer 13 with the first plate 111 and forming a first weld joint, and making the first weld joint extend along at least part of the outer edge of the first prism side 133 of the reinforcer 13, this welding structure is conducive to reducing the welding difficulty between the reinforcer 13 and the first plate 111, and can ensure the welding strength between the first plate 111 and the reinforcer 13. Similarly, by welding the reinforcer 13 and the partition beam 12 together to form a second weld joint, and making the second weld joint extend along at least a portion of the outer edge of the second prism side 134 of the reinforcer 13, this welding structure is conducive to reducing the difficulty of welding between the reinforcer 13 and the partition beam 12, and can ensure the welding strength between the partition beam 12 and the reinforcer 13.

In the embodiment where reinforcer 13 is in a prismatic structure, as shown in FIGS. 4 and 5, a cavity 131 is formed inside the reinforcer 13 that runs through both ends of the reinforcer 13 in the first direction X, and the first direction X is parallel to the side edges of the reinforcer 13.

A cavity 131 is formed inside the reinforcer 13 that runs through both ends of the reinforcer 13 along the first direction X, that is, the cavity 131 runs through both ends of the reinforcer 13 along the extension direction of the side edges of the reinforcer 13.

By setting a cavity 131 extending in the first direction X inside the reinforcer 13, the surface through which the reinforcer 13 is penetrated by the cavity 131 is different from the surfaces on which the reinforcer 13 is used to connect with the first plate 111 and the partition beam 12 respectively, thereby reducing the weight of the reinforcer 13 while ensuring the contact area between the reinforcer 13 and the first plate 111 and the partition beam 12, so as to reduce the overall weight of the box 10.

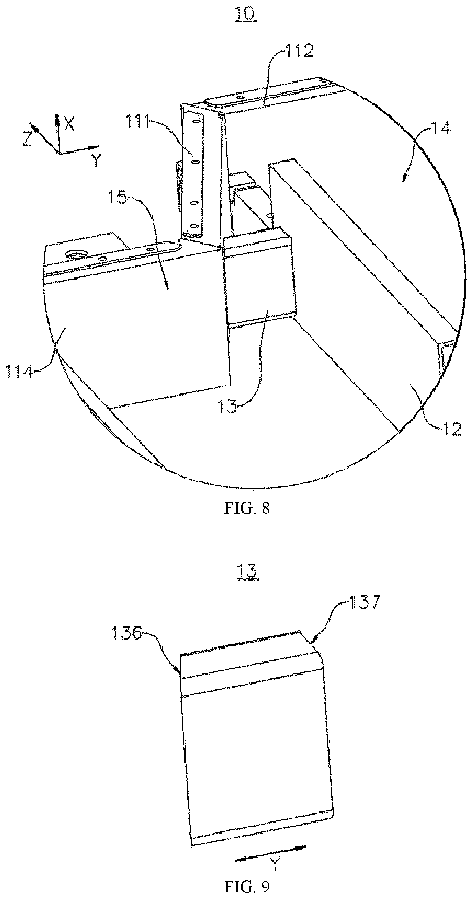

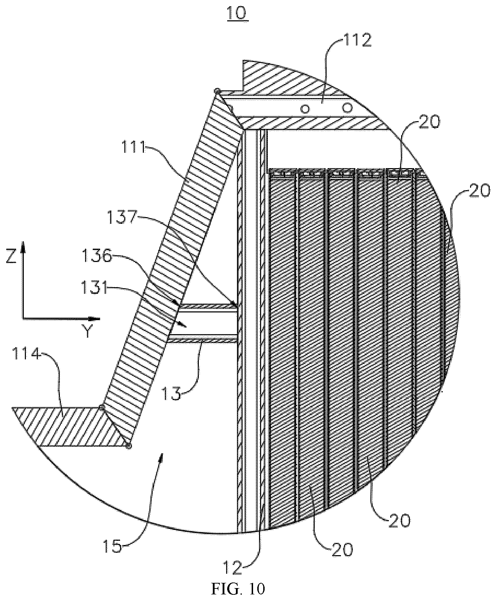

According to some embodiments of the present disclosure, referring to FIGS. 8, 9 and 10, FIG. 8 is a partially structural schematic view of the box 10 provided in some other embodiments of the present disclosure; FIG. 9 is a structural schematic view of the reinforcer 13 of the box 10 provided in some other embodiments of the present disclosure; and FIG. 10 is a locally sectional view of the box 10 provided in some other embodiments of the present disclosure. The extension direction of the reinforcer 13 is parallel to the thickness direction Y of the partition beam, and the two ends of the reinforcer 13 are respectively connected to the first plate 111 and the partition beam 12.

The extension direction of reinforcer 13 is parallel to the thickness direction Y of the partition beam, that is, reinforcer 13 is perpendicular to the partition beam 12.

In some embodiments, as shown in FIGS. 9 and 10, along the thickness direction Y of the partition beam, the two ends of the reinforcer 13 are respectively provided with a first end surface 136 and a second end surface 137. The first end surface 136 and the surface of the first plate 111 facing the second accommodating space 15 are mutually adhered, and the second end surface 137 and the surface of the partition beam 12 facing the second accommodating space 15 are mutually adhered. The reinforcer 13 of this structure can increase the contact area between the reinforcer 13 and the first plate 111 and the partition beam 12 on one hand, thereby improving the overall structural stability of the box 10. On the other hand, it is beneficial for the partition beam 12 to transmit the expansion force generated by the expansion of the battery cell 20 to the first plate 111 through the reinforcer 13.

By setting the extension direction of the reinforcer 13 to be parallel to the thickness direction Y of the partition beam, the reinforcer 13 is a structure perpendicular to the partition beam 12. The box 10 of this structure can improve the support effect of the reinforcer 13 on the partition beam 12, so that the reinforcer 13 can transfer the force of the battery cell 20 acting on the partition beam 12 to the first plate 111, thereby improving the deformation resistance of the partition beam 12.

In some embodiments, as shown in FIGS. 9 and 10, a cavity 131 is formed inside the reinforcer 13 that runs through both ends of the reinforcer 13 along the thickness direction Y of the partition beam.

In the above description, cavity 131 runs through both ends of reinforcer 13 in the thickness direction Y of the partition beam, that is, cavity 131 extends along the thickness direction Y of the partition beam, and both ends of cavity 131 run through the first end surface 136 and the second end surface 137, respectively.

By setting cavity 131 extending along the thickness direction Y of the partition beam inside the reinforcer 13, wherein the cavity 131 extends through both ends of the reinforcer 13, the extension direction of the cavity 131 is consistent with the extension direction of the reinforcer 13, so that the cross-section of the cavity 131 of the reinforcer 13 is connected to the partition beam 12. Adopting this structure of the reinforcer 13 can reduce the weight of the reinforcer 13 on one hand, and achieve the lightweight box 10. On the other hand, it is beneficial for the reinforcer 13 to transfer the force of the battery cells 20 on the partition beam 12 to the first plate 111, and can effectively reduce the phenomenon of deformation of the reinforcer 13.

According to some embodiments of the present disclosure, as shown in FIG. 3, the length of the frame 11 along the thickness direction Y of the partition beam is L₁, which satisfies: 900mm ≤ L₁ ≤ 2800mm.

The length of frame 11 is L₁, which means that the maximum size of frame 11 in the thickness direction Y of the partition beam is between 900mm and 2800mm.

For example, the length of frame 11 in the thickness direction Y of the partition beam can be 900mm, 1000mm, 1200mm, 1500mm, 2000mm, 2500mm, or 2800mm, etc.

According to some embodiments of the present disclosure, continuing to refer to FIG. 3, the length of the partition beam 12 is L₂, which satisfies: 500mm ≤ L₂ ≤ 1700mm.

The partition beam 12 extends along the second direction Z, and the length of partition beam 12 is L₂, that is, the maximum size of L₂ beam 12 in the second direction Z is between 500mm and 1700mm.

For example, the length of partition beam 12 in the second direction Z can be 500mm, 600mm, 800mm, 1000mm, 1200mm, 1500mm, or 1700mm, etc.

According to some embodiments of the present disclosure, as shown in FIGS. 2 and 3, the embodiments of the present disclosure also provide a battery 100, including a battery cell 20 and the box 10 in any one of the above solutions, wherein battery cell 20 is accommodated in the first accommodating space 14.

In some embodiments, the projection of the reinforcer 13 along the thickness direction Y of the partition beam coincides at least partially with the projection of the battery cell 20.

The projection of reinforcer 13 overlaps at least partially with the projection of battery cell 20, that is, in the thickness direction Y of the partition beam, reinforcer 13 overlaps at least partially with battery cell 20.

By setting the projection of the reinforcer 13 in the thickness direction Y of the partition beam to coincide with at least a part of the projection of the battery cell 20, the reinforcer 13 is correspondingly set with at least a part of the battery cell 20 in the thickness direction Y of the partition beam, so that the reinforcer 13 can support and strengthen the area where the partition beam 12 supports the displacement or expansion of the battery cell 20. This is conducive to further improving the effectiveness of the partition beam 12 in resisting the displacement or expansion of battery cells 20, and facilitates the reinforcer 13 to transfer the force exerted by battery cells 20 on the partition beam 12 to the frame 11, thereby alleviating the deformation phenomenon of the partition beam 12.

According to some embodiments of the present disclosure, as shown in FIG. 2, the battery cell 20 is in a cuboid structure, and the battery cell 20 has a first surface 21, wherein the first surface 21 is the surface with the largest area among the outer surfaces of the battery cell 20, and the first surface 21 is set facing the partition beam 12.

The first surface 21 is the surface with the largest area in the outer surfaces of the battery cell 20. The first surface 21 is set facing the partition beam 12, that is, the thickness direction of the battery cell 20 is the same as the thickness direction Y of the partition beam.

The first surface 21 with the largest area in the outer surfaces of the battery cell 20 is set facing the partition beam 12, that is, the surface with the largest expansion size of the battery cell 20 is set facing the partition beam 12 during use. Therefore, the partition beam 12 can effectively constrain the expansion of the battery cell 20, reducing the risk of fire and explosion caused by excessive expansion and deformation of the battery cell 20 during use.

In some embodiments, the battery cell 20 comprises an electrode assembly in a wound structure, wherein the winding axis of the electrode assembly is perpendicular to the thickness direction Y of the partition beam, and the size of the electrode assembly in the thickness direction Y of the partition beam is smaller than the size of the electrode assembly in other directions perpendicular to the winding axis of the electrode assembly.

The electrode assembly of the battery cell 20 is accommodated within the shell of the battery cell 20, and the wound structure of the electrode assembly is formed by winding the positive electrode plate, negative electrode plate, and separator. The specific structure of the electrode assembly with a reinforcer can be found in the relevant technology, and will not be elaborated here.

The size of the electrode assembly in the thickness direction Y of the partition beam is smaller than the size of the electrode assembly in other directions perpendicular to the winding axis of the electrode assembly, that is, the shape of the wound structure of the electrode assembly is flat, and the thickness direction of the flat area of the electrode assembly is consistent with the thickness direction Y of the partition beam.

By setting the winding axis of the electrode assembly inside the battery cell 20 perpendicular to the thickness direction Y of the partition beam, and making the electrode assembly have the smallest size in the thickness direction Y of the partition beam, the battery 100 with this structure can effectively constrain in the direction of maximum expansion size of the battery cell 20 through the partition beam 12, in order to reduce the phenomenon of expansion and deformation of the battery cell 20 with electrode assembly in a wound structure.

In some embodiments, the battery cell 20 comprises an electrode assembly in a stacked structure, and the stacking direction of the electrode assembly is parallel to the thickness direction Y of the partition beam.

The electrode assembly of the stacked structure is in a stacked structure formed by stacking the positive electrode plate, negative electrode plate, and separator. The specific structure of the electrode assembly with a stacked structure can be found in the relevant technology, and will not be elaborated here.

The stacking direction of the electrode assembly is parallel to the thickness direction Y of the partition beam, which means that the positive electrode plate, negative electrode plate, and separator of the electrode assembly are sequentially stacked along the thickness direction Y of the partition beam.

By setting the stacking method of the electrode assembly inside the battery cell 20 to be consistent with the thickness direction Y of the partition beam, the battery 100 with this structure can effectively constrain in the direction of the maximum expansion size of the battery cell 20 through the partition beam 12, in order to alleviate the phenomenon of expansion and deformation of the battery cell 20 with stacked electrode assembly.

In the embodiment where the battery cell 20 is in a cuboid structure, the thickness of the battery cell 20 along the thickness direction Y of the partition beam is L₃, which satisfies: 5mm≤L₃≤40mm.

Due to the first surface 21 of the battery cell 20 facing the partition beam 12, the thickness direction of the battery cell 20 is consistent with the thickness direction Y of the partition beam. The thickness of the battery cell 20 is L₃, which means that the size of the battery cell 20 in the thickness direction Y of the partition beam is between 5mm and 40mm.

For example, in the thickness direction Y of the partition beam, the thickness of the battery cell 20 can be 5mm, 8mm, 10mm, 20mm, 25mm, 30mm, or 40mm, etc.

In some embodiments, the length of the battery cell 20 along the extension direction of the partition beam 12 is L₄, which satisfies: 400mm ≤ L₄ ≤ 2500mm.

Due to the extension of partition beam 12 along the second direction Z, the extension direction of partition beam 12 is the second direction Z. The length of battery cell 20 is L₄, that is, the maximum size of battery cell 20 in the second direction Z is between 400mm and 2500mm.

For example, the length of battery cell 20 in the second direction Z can be 400mm, 500mm, 600mm, 700mm, 1000mm, 1500mm, 2000mm, or 2500mm, etc.

According to some embodiments of the present disclosure, the battery cell 20 can also be in a cylindrical structure, and the axis direction of the battery cell 20 is perpendicular to the thickness direction Y of the partition beam.

The axis direction of battery cell 20 is perpendicular to the thickness direction Y of the partition beam, that is, the extension direction of battery cell 20 is the first direction X perpendicular to the thickness direction Y of the partition beam.

The battery cells 20 placed inside the box 10 of the battery 100 are in a cylindrical structure. By setting the axis direction of the battery cells 20 to be consistent with the thickness direction Y of the partition beam, the outer peripheral surface of the battery cells 20 is facing the partition beam 12. This structure of the battery 100 can effectively constrain in the direction of the maximum expansion size of the battery cells 20 through the partition beam 12.

According to some embodiments of the present disclosure, as shown in FIG. 2, there are multiple battery cells 20 arranged in a stacked manner along the thickness direction Y of the partition beam.

For example, the battery 100 comprises two rows of battery cells 20 arranged along the second direction Z, and each row of battery cells 20 comprises multiple battery cells 20 stacked along the thickness direction Y of the partition beam. Of course, in other embodiments, the battery 100 may also include only one row of battery cells 20, and may also include three rows of battery cells 20, four rows of battery cells 20, or five rows of battery cells 20 arranged along the second direction Z.

The multiple battery cells 20 arranged in the box 10 are stacked along the thickness direction Y of the partition beam, so that the partition beam 12 can limit at the direction of maximum expansion size of multiple battery cells 20, and can simultaneously limit the expansion of multiple battery cells 20, thereby alleviating the risk of expansion and deformation of multiple battery cells 20 of the battery 100, which is beneficial for improving the service life and usage safety of batteries 100.

According to some embodiments of the present disclosure, the embodiments of the present disclosure also provide an electrical equipment, including a battery 100 in any one of the above solutions, and the battery 100 is used to provide electrical energy to the electrical equipment.

The electrical device can be any of the aforementioned equipment or systems that use battery 100.

According to some embodiments of the present disclosure, as shown in FIGS. 2 to 5 and FIG. 7, the present disclosure provides a box 10, which comprises a frame 11, a partition beam 12, a reinforcer 13, and a bottom plate 16. The frame 11 is arranged surrounding the bottom plate 16, and the interior of the frame 11 forms an accommodating space. The partition beam 12 is arranged inside the frame 11, extending along the second direction Z, and the two ends of the partition beam 12 are respectively connected to the frame 11. The partition beam 12 is configured to divide the accommodating space into a first accommodating space 14 and a second accommodating space 15 arranged along the thickness direction Y of the partition beam. The first accommodating space 14 is used to accommodate the battery cell 20, and the frame 11 has a first plate 111 arranged at an acute angle with the partition beam 12. The reinforcer 13 is located in the second accommodating space 15, and is in a straight triangular prism structure. The reinforcer 13 includes the first prism side 133, the second prism side 134, and the third prism side 135, which are sequentially connected end to end. The first prism side 133 is welded to the surface of the first plate 111 facing the second accommodating space 15, and the second prism side 134 is welded to the surface of the partition beam 12 facing the second accommodating space 15. The surface area of the first prism side 133 and the surface area of the second prism side 134 are both larger than the surface area of the third prism side 135. A cavity 131 is formed inside the reinforcer 13 that runs through both ends of the reinforcer 13 in the first direction X, and the first direction X is parallel to the side edges of the reinforcer 13.

It should be noted that in the absence of conflicts, the embodiments and the features in the embodiments in the present application can be combined with each other.

The above is only preferred embodiments of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A box, comprising:
a frame, forming an accommodating space;
a partition beam, provided inside the frame, and configured to divide the accommodating space into a first accommodating space and a second accommodating space, wherein the first accommodating space is configured to accommodate a battery cell; and
a reinforcer, arranged in the second accommodating space, arranged between the partition beam and the frame, and configured to transfer a force between the partition beam and the frame.

2. The box according to claim 1, wherein a cavity is formed inside the reinforcer.

3. The box according to claim 2, wherein reinforcing ribs are provided inside the cavity, and the reinforcing ribs are connected to a cavity wall surface of the cavity.

4. The box according to any one of claims 1-3, wherein the reinforcer is made by an extrusion molding process.

5. The box according to any one of claims 1-4, further comprising a bottom plate, wherein the frame is arranged around the bottom plate, and the reinforcer is fixedly connected to at least one of the frame, the partition beam, and the bottom plate.

6. The box according to any one of claims 1-5, wherein two sides of the reinforcer respectively abut against and are fixedly connected to the frame and the partition beam.

7. The box according to claim 6, wherein the reinforcer is made of a metal material, and the frame has a connecting part, wherein the connecting part is configured to be welded with the reinforcer, and the connecting part is made of a metal material.

8. The box according to claim 6, wherein the reinforcer is made of a metal material, and the partition beam has a connecting wall, wherein the connecting wall is configured to be welded with the reinforcer, and the connecting wall is made of a metal material.

9. The box according to any one of claims 6-8, wherein the two sides of the reinforcer are welded to the frame and the partition beam respectively, and the reinforcer, the frame, and the partition beam are all made of the same metal material.

10. The box according to any one of claims 1-9, wherein the frame comprises a first plate, wherein the first plate is configured to be connected with the reinforcer, and the first plate is arranged at an acute angle with respect to the partition beam.

11. The box according to claim 10, wherein the reinforcer is in a prismatic structure, and the first plate and the partition beam are connected to different prismatic sides of the reinforcer respectively.

12. The box according to claim 11, wherein the reinforcer is in a straight triangular prism structure, comprising a first prism side, a second prism side, and a third prism side that are sequentially connected end to end, wherein:
the first prism side is configured to be connected to the first plate, and the second prism side is configured to be connected to the partition beam; and
a surface area of the first prism side and a surface area of the second prism side are both greater than that of the third prism side.

13. The box according to claim 12, wherein the reinforcer is configured to be welded to the first plate and the partition beam, and form a first weld joint and a second weld joint, wherein the first weld joint extends along at least a portion of an outer edge of the first prism side, and the second weld joint extends along at least a portion of an outer edge of the second prism side.

14. The box according to any one of claims 11-13, wherein a cavity that runs through both ends of the reinforcer in a first direction is formed inside the reinforcer, and the first direction is parallel to side edges of the reinforcer.

15. The box according to claim 10, wherein an extension direction of the reinforcer is parallel to a thickness direction of the partition beam, and two ends of the reinforcer are respectively connected to the first plate and the partition beam.

16. The box according to claim 15, wherein a cavity that runs through both ends of the reinforcer along the thickness direction of the partition beam is formed inside the reinforcer.

17. The box according to any one of claims 1-16, wherein a length of the frame along a thickness direction of the partition beam is L₁, which satisfies: 900mm ≤ L₁ ≤ 2800mm.

18. The box according to any one of claims 1-17, wherein a length of the partition beam is L₂, which satisfies: 500mm ≤ L₂ ≤ 1700mm.

19. A battery, comprising:
the box according to any one of claims 1-18; and
a battery cell, accommodated within the first accommodating space.

20. The battery according to claim 19, wherein along a thickness direction of the partition beam, a projection of the reinforcer coincides at least partially with a projection of the battery cell.

21. The battery according to claim 19 or 20, wherein the battery cell is in a cuboid structure, and the battery cell has a first surface, wherein the first surface is a surface with a largest area among outer surfaces of the battery cell, and the first surface is arranged facing the partition beam.

22. The battery according to any one of claims 19-21, wherein the battery cell comprises an electrode assembly in a wound structure, wherein a winding axis of the electrode assembly is perpendicular to a thickness direction of the partition beam, and a size of the electrode assembly in the thickness direction of the partition beam is smaller than a size of the electrode assembly in other directions perpendicular to the winding axis of the electrode assembly.

23. The battery according to any one of claims 19-21, wherein the battery cell comprises an electrode assembly in a stacked structure, and a stacking direction of the electrode assembly is parallel to a thickness direction of the partition beam.

24. The battery according to any one of claims 21-23, wherein a thickness of the battery cell along a thickness direction of the partition beam is L₃, which satisfies: 5mm≤L₃≤40mm.

25. The battery according to any one of claims 21-24, wherein a length of the battery cell along an extension direction of the partition beam is L₄, which satisfies: 400mm ≤ L₄ ≤ 2500mm.

26. The battery according to claim 19 or 20, wherein the battery cell is in a cylindrical structure, and an axis direction of the battery cell is perpendicular to a thickness direction of the partition beam.

27. The battery according to any one of claims 19-26, wherein multiple battery cells are provided and the multiple battery cells are arranged in a stacked manner along a thickness direction of the partition beam.

28. An electrical equipment, comprising the battery according to any one of claims 19-27, wherein the battery is configured to provide electric energy.
